# EUROPÄISCHE PATENTANMELDUNG

(11) **EP 1 626 374 A1**
(43) Veröffentlichungstag der Anmeldung: **15.02.2006**
(21) Anmeldenummer: 04019348.4
(22) Anmeldetag: 14.08.2004
(51) Int. Cl.: G07F 7/08, G07F 7/10, G07F 19/00

(54) **System und Verfahren zur Verwaltung von auf der Verwendung von Smart-Cards basierenden Nutzungsberechtigungen**

(71) Anmelder: Scheidt & Bachmann GmbH, D-41238 Mönchengladbach (DE)
(72) Erfinder: Miller, Norbert Dr., 41063 Mönchengladbach (DE); Flügge, Wolfgang, 41366 Schwalmtal (DE); Koczwara, Martin, 41844 Wegberg (DE)
(74) Vertreter: Stenger, Watzke & Ring

(57) **Zusammenfassung**

Um ein System und ein Verfahren zur Verwaltung von auf der Verwendung von Smart-Cards basierende Nutzungsberechtigungen bereitzustellen, welche bei hoher Flexibilität einen hohen Grad an Sicherheit sowohl für den Betreiber als auch den Nutzer bietet, möglichst ohne Dauerkommunikationsverbindung der Feldgeräte zu einem Zentralrechner auskommt und auch für den Massenbetrieb zeitgerecht praktikabel ist, wird ein System zur Verwaltung von auf der Verwendung von Smart-Cards basierenden Nutzungsberechtigungen vorgeschlagen, umfassend eine Zentralrechneranlage, Feldgeräte und bei potentiellen Nutzern befindliche Smart-Cards, wobei die Zentralrechneranlage Datenbanken mit allen Informationen in Bezug auf die Nutzer, Nutzerkonten, diesen zugeordneten Smart-Cards, Feldgeräte und Produkte führt, zumindest zeitweise mit den Feldgeräten eine Kommunikationsverbindung aufbaut und hält und aufgrund der ihr zur Verfügung stehenden Informationen Weisungen über durchzuführende Aktionen erstellt und an eine Vielzahl von Smart-Card-bezogen relevanten Feldgeräten übermittelt, die Feldgeräte zumindest Datenbanken mit Informationen in Bezug auf die Smart-Cards und Produkte führen, so daß bei Aufbau einer Kommunikationsverbindung zwischen einem Feldgerät und einer Smart-Card wenigstens ein Teil der Smart-Card-bezogenen Weisungen aus der Weisungsliste abgearbeitet und feldgerätseitig gespeichert und während der nächsten Kommunikationsverbindung an die Zentralrechneranlage übermittelt werden, und wobei die Smart-Cards eine Identifikation tragen und bei einer Kommunikationsverbindung mit einem Feldgerät Informationen austauschen und eine vorgegebene Anzahl von abgearbeiteten Weisungen speichern.

## Beschreibung

Die vorliegende Erfindung betrifft ein System und ein Verfahren zur Verwaltung von auf der Verwendung von Smart-Cards basierenden Nutzungsberechtigungen, umfassend eine Zentralrechneranlage, Feldgeräte und bei potentiellen Nutzern befindliche Smart-Cards.

Systeme und Verfahren zur Verwaltung von Nutzungsberechtigungen auf Basis der Verwendung von Smart-Cards sind umfangreich im Einsatz und in der Entwicklung.

Beispielsweise im Anwendungsbereich der Nutzung öffentlicher Verkehrsmittel sind solche Systeme bereits geläufig. Die Nutzer werden mit systembezogenen Smart-Cards ausgestattet und haben nun die Möglichkeit, angebotene Verkehrsverbindungen, Bahn, Bus, Fähre und dergleichen zu nutzen. Hierfür sind unterschiedlichste Systeme bekannt. Im einfachsten Fall ersetzt die Smart-Card ein Einzelticket, indem an dafür vorgesehene Stationen die Smart-Card mit den konkreten Berechtigungsinformationen gegen Bezahlung versehen wird. Die Bezahlung kann in bar, bargeldlos, z. B. per Kreditkarte, durch Bankeinzug oder sonstwie erfolgen. Als Zugangskontrolleinheiten werden Feldgeräte verwendet, die mit der Smart-Card eine Kommunikationsverbindung aufbauen können und im beschriebenen einfachsten Fall die Berechtigungsinformationen direkt entnehmen und damit die Berechtigung einräumen können, indem sie dem Nutzer Zugang gewähren.

Smart-Cards sind indes sehr viel flexibler und die Systeme können ohne weiteres sehr viel umfassender angewendet werden.

So sind beispielsweise zentralrechnerbasierende Systeme bekannt, bei welchen eine ständige Kommunikationsverbindung zwischen dem Zentralrechner und den Feldgeräten besteht. Erscheint eine Smart-Card im Kommunikationsbereich eines Feldgerätes in Bezug auf eine gewünschte Nutzung fragt das Feldgerät beim Zentralrechner die Bonität des Kunden ab und gewährt Zugang oder nicht. Derartige Systeme sind jedoch für den Massenbetrieb, beispielsweise öffentliche Verkehrsmittel in Großstadtgebieten, ungeeignet, da die zeitlichen Abläufe in Bezug auf Kreditkartenüberprüfung, Bankeinzug und dergleichen nicht mit den Erfordernissen in Bezug auf eine schnelle Entscheidung über die Zugangsberechtigung kompatibel sind. Es kommt zu umfangreichen Störungen, Warteschlangen und dergleichen.

Um dies zu vermeiden ist beispielsweise mit der US 66,55,587 B2 vorgeschlagen, Smart-Cards mit einem sogenannten autoloadflag zu versehen. Hierdurch werden in der Zentralrechneranlage vorausschauend aufgebaute Guthaben bei Aufbau einer Kommunikationsverbindung zwischen der Smart-Card und einem Feldgerät der Smart-Card übertragen. Die Smart-Card wird also wie eine Geldkarte geladen und auch wie eine solche zum Erwerb von Zugangsberechtigungen, sprich Tickets und dergleichen, genutzt. Da sowohl die Kreditkarteninformationen als auch die flag auf der Karte gespeichert sind, ist Mißbrauch unvermeidlich, z. B. bei Verlust. Bei dem genannten System löscht das Feldgerät eine übertragene Aktion nach der Abarbeitung, diese Information geht also verloren.

Bei allen Systemen geht es grundsätzlich um den Abgleich zwischen den aktuellen, kostenpflichtigen Nutzungswunsch des Nutzers einerseits und seiner realen Bonität andererseits.

Alle bekannten Systeme sind diesbezüglich in verschiedener Hinsicht nachteilig. Die Nutzungsanbieter sind in der Regel auf die üblichen Bonitätsmöglichkeiten reduziert. D. h. der Kunde kann ein Guthaben führen, kann eine Kreditkarte nutzen oder beispielsweise Bankeinzug gewähren, was aber nur dann zeitlich sinnvoll ist, wenn das Konto auch entsprechendes Guthaben aufweist, was zu überprüfen wiederum mit dem aktuellen Nutzungswunsch des Kunden nicht in Einklang zu bringen ist.

Darüber hinaus sind die bekannten Systeme höchst sicherheitsempfindlich. In der Regel werden die Bonitätsinformationen, beispielsweise Kreditkartennummern und dergleichen auf den Smart-Cards selbst geführt, ebenso wie die erforderlichen personenbezogenen Informationen. Der Verlust einer Smart-Card stellt somit ein erhebliches Sicherheitsrisiko dar. Darüber hinaus werden die Smart-Cards in einer gewissen Weise autark, können also unter Verwendung der auf ihnen gespeicherten Kreditkarteninformationen oder dergleichen dauerhaft mißbraucht werden. Schlußendlich sind die Systeme nicht ausreichend flexibel, da der Systembetreiber und/oder der Kunde eine erhebliche Vorausschau auf die Nutzungswünsche haben muß, um unter den kurzzeitigen Reaktionsbedingungen spontane Nutzungswünsche erfüllen zu können.

Darüber hinaus besteht Bedarf an einem gattungsgemäßen System bzw. Verfahren, welches sich in einem möglichst großen Spektrum anwenden läßt, also weitgehend unabhängig von dem System des Systembetreibers. Smart-Cardbasierende Nutzungssysteme und Nutzungsverfahren lassen sich einsetzen in allen öffentlichen Zugangsbereichen, also öffentlichen Verkehrsmitteln, Schwimmbäder, Aufführungsorten wie Stadien, Theater und dergleichen, in Parkhaussystemen und sogar in mehr oder weniger automatisierten Warenbezugssystemen, Tankstellen, Supermärkten und dergleichen.

Ausgehend vom vorbeschriebenen Stand der Technik liegt der Erfindung die Aufgabe zugrunde, ein System und ein Verfahren zur Verwaltung von auf der Verwendung von Smart-Cards basierende Nutzungsberechtigungen bereitzustellen, welche bei hoher Flexibilität einen hohen Grad an Sicherheit sowohl für den Betreiber als auch den Nutzer bietet, möglichst ohne Dauerkommunikationsverbindung der Feldgeräte zu einem Zentralrechner auskommt und auch für den Massenbetrieb zeitgerecht praktikabel ist.

Zur technischen Lösung dieser Aufgabe wird mit der Erfindung vorgeschlagen, ein System zur Verwaltung von auf der Verwendung von Smart-Cards basierenden Nutzungsberechtigungen einzusetzen, umfassend eine Zentralrechneranlage, Feldgeräte und bei potentiellen Nutzern befindliche Smart-Cards, wobei die Zentralrechneranlage Datenbanken mit allen Informationen in Bezug auf die Nutzer, Nutzerkonten, diesen zugeordneten Smart-Cards, Feldgeräte und Produkte führt, zumindest zeitweise mit den Feldgeräten eine Kommunikationsverbindung aufbaut und hält und aufgrund der ihr zur Verfügung stehenden Informationen Weisungen über durchzuführende Aktionen erstellt und an eine Vielzahl von Smart-Card-bezogen relevanten Feldgeräten übermittelt, die Feldgeräte zumindest Datenbestände mit Informationen in Bezug auf die Smart-Cards und Produkte führen, so daß bei Aufbau einer Kommunikationsverbindung zwischen einem Feldgerät und einer Smart-Card wenigstens ein Teil der Smart-Card-bezogenen Weisungen aus der Weisungsliste abgearbeitet und feldgerätseitig gespeichert und während der nächsten Kommunikationsverbindung an die Zentralrechneranlage übermittelt werden, und wobei die Smart-Cards eine Identifikation tragen und bei einer Kommunikationsverbindung mit einem Feldgerät Informationen austauschen und eine vorgegebene Anzahl von abgearbeiteten Weisungen speichern.

Das erfindungsgemäße System und dazu korrespondierende Verfahren schaffen verschiedene Ebenen der Informationsverwaltung, wobei die unterschiedlichen Ebenen in einer vorgegebenen Kommunikationsstruktur miteinander kommunizieren.

Die Zentralrechneranlage bildet die Leitebene. Ihre Datenbanken umfassen sämtliche Informationen über die Systemelemente, also sämtliche Feldgeräte und sämtliche Smart-Cards. Darüber hinaus werden Informationen über Produkte geführt und schließlich die erforderlichen Informationen über die registrierten Nutzer, also Kontoinformationen, Kreditkarteninformationen, die Produktprofile, sofern diese planbare Produkte wie beispielsweise Monatskarten oder dergleichen sind usw..

Die Feldgeräte bilden die Feldebene. Hier befinden sich Datenbestände mit Informationen über die untergeordneten Systeme, im wesentlichen also die Produkte und deren Eigenschaften sowie gegebenenfalls Informationen über spezielle Karten. Auf den Smart-Cards befinden sich nurmehr Nutzungsinformationen und Systeminformationen, also beispielsweise eine Identifikationsnummer, die die Smart-Card eindeutig im System identifiziert und beispielsweise eine Produktnummer, ein Guthaben sowie eine Historie, oder nur einzelne davon.

Die Hierarchien des Systems wirken über in sogenannten Aktionslisten aufgeführte Weisungen zusammen. Diese werden ausschließlich von der Zentralrechneranlage erstellt und ausgegeben und zwar auf der Basis der vorhandenen Informationen. In der Zentralrechnerebene wird ein als Weisungsmanager bezeichnetes System verwendet, um die Aktionslisten zu erstellen. Dazu werden verwendet die Informationen aus den Rückmeldungen der Feldgeräte über durchgeführte Aktionen, den gesamten Aktionslistenhistories, den Kontohandlingprozessen, den Betrugserfassungsvorgängen und etwaigen zusätzlichen Informationen aufgrund direkter Kundenmitteilung, beispielsweise über ein grafisches user-interface. Ein registrierter Nutzer wird in Bezug auf seine Bonität identifiziert. Er hat beispielsweise ein Guthaben oder es liegt eine Kreditkarteninformation vor oder ein Abbuchungsauftrag. Die Zentralrechneranlage hat praktisch ein vollständiges virtuelles Abbild des Gesamtsystems umfassend die Feldgeräte, die Produkte und die Smart-Cards. Es verknüpft nun die vorliegenden Bonitätsinformationen mit den Systeminformationen und erstellt Weisungslisten, beispielsweise auf eine Smart-Card mit einer bestimmten Identifikation einen bestimmten Guthabenbetrag zu buchen, eine Monatskarte weiterhin zu akzeptieren oder dergleichen. Hieraus werden Weisungen erstellt und an sämtliche relevanten Feldgeräte übermittelt. Smart-Card-bezogen relevante Feldgeräte sind solche, die dem Nutzerprofil entsprechen. Handelt es sich beispielsweise um einen Nutzer, der ausschließlich Bus fährt, so erhalten die an den Busstationen oder in den Bussen vorhandenen einschlägigen Feldgeräte die Informationen, die übrigen Feldgeräte benötigen diese zwingend nicht, können diese aber selbstverständlich auch erhalten.

Die Feldgeräte verwalten somit gewissermaßen Smart-Card-bezogene Weisungen. Kommt es an irgend einer Stelle zu einer Kommunikation zwischen einer Smart-Card und einem Feldgerät, so werden die Weisungen, die fortlaufend numeriert sein können, abgearbeitet. Dabei kommt es zu einem Informationsaustausch zwischen Smart-Card und Feldgerät und auf der Smart-Card wird als Historie eine vorgegebene Anzahl, beispielsweise drei der zuletzt abgearbeiteten Weisungen gespeichert. Auf diese Weise wird verhindert, daß Weisungen mehrfach ausgeführt werden, wenn beispielsweise die gleiche Smart-Card innerhalb kürzester Zeit an einem anderen Feldgerät erscheint. Die Feldgeräte würden nur die neueren, über die in der Historie der Smart-Card hinaus gespeicherten Weisungen abarbeiten.

Die Weisungsliste enthält gemäß einem Vorschlag der Erfindung immer nur so viele Weisungen je Karte, wie diese als Historie speichern kann. Diese Logik der Erstellung der Weisungsliste ist eine Funktionalität des Zentralrechners.

Die Feldgeräte zeichnen ausgeführte Weisungen auf und senden diese Aufzeichnungen bei der nächsten Kommunikationsverbindung an die Zenträlrechneranlage zurück, die daraufhin ihre eigenen Informationen aktualisiert. Darüber hinaus erstellt die Zentralrechneranlage aktualisierte Weisungslisten, aus denen abgearbeitete Weisungen entfernt und weitere, neuere Weisungen hinzugefügt sind.

Um zu vermeiden, daß die gleichen Weisungen mehrfach ausgeführt werden, werden auf der Karte die Nummern der zuletzt ausgeführten Aktionen in einer Historie gespeichert. Beim nächsten Auftauchen der Karte im Kommunikationsbereich eines Feldgerätes kann dieses somit feststellen, welche möglicherweise noch nicht aktualisierten Aktionsweisungen nicht mehr auszuführen sind.

In der Zentralrechneranlage werden somit die Identifikation der Smart-Card und die ausgeführten Weisungen verglichen, bevor weitere Aktionen eingestellt werden. Es sind hier verschiedene Varianten grundsätzlich möglich. Wenn gemäß dem Vorschlag die Weisungsliste pro Karte immer nur so viele Weisungen enthält, wie diese speichern kann, kontrolliert der Zentralrechner die Abarbeitung der Weisungen. Es werden immer vollständige Weisungslisten übertragen. Gemäß einem alternativen Vorschlag können auch Weisungslisten sequentiell ergänzt werden. So kann beispielsweise eine beliebige Anzahl von Weisungen pro Karte an das Feldgerät übermittelt werden. Diese enthalten dann beispielsweise auch die Weisung, abgearbeitete und noch im Feldgerät in der Weisungsliste enthaltene Weisungen zu löschen. In dem Fall wird auf die Feldebene die Verantwortung übertragen, immer nur so viel Weisungen auszuführen und auf die Karte zu kopieren, wie diese speichern kann. Durch eine konsequente fortlaufende Numerierung aller Weisungen wird somit sichergestellt, daß keine Weisungen zweimal durchgeführt werden. Da auf der Karte beispielsweise die letzten drei durchgeführten Weisungen oder beispielsweise nur die Nummer der letzten Weisung gespeichert sind, kann ein noch nicht aktualisiertes Feldgerät dennoch mit der nächsten laufenden Nummer fortfahren, wenn es zu einer Kontaktaufnahme zwischen Smart-Card und Feldgerät kommt.

Es ist bereits offensichtlich, daß dieses System und das darauf bezogene Verfahren den Vorteil bieten, daß die Smart-Card keinerlei sicherheitsrelevanten Informationen trägt, ihr Verlust den Nutzer also praktisch nicht in Probleme bringen kann. Auch ist offensichtlich, daß das System überaus flexibel ist. Es kann nicht nur alle bisherigen üblichen Systeme wie Geldbetragaufbuchung, Guthabenidentifizierung bzw. Bonitätsindex, Kreditkartennutzung und dergleichen realisieren, es kann darüber hinaus auch bis ins letzte Detail nutzungsbezogen abgewandelt und angepaßt werden.

Die von dem Zentralrechner zusammengestellten Weisungen, die eine an die Feldgeräte zu übermittelnde Actionlist bilden, werden fortlaufend numeriert und können je nach Vorgang die unterschiedlichsten Informationen enthalten. Zunächst einmal wird ein Nutzer sich bei dem Betreiber registrieren, seine persönlichen Daten angeben und die Zahlungsweise klären. Es wird dann eine Smart-Card-Identifikation zugeordnet und diese kann zur Initialisierung auch mit einer ein oder mehrere Produkte identifizierenden Codierung versehen werden, beispielsweise daß es sich um eine Monatskarte für eine bestimmte Linie, eine Karte für einen bestimmten Netzteil oder dergleichen handelt. Nachdem die Karte dem Nutzer übermittelt wurde, erhalten die Feldgeräte im Rahmen einer der nächsten Actionlists die Information, diese Karte als aktiv aufzunehmen, welchem Produkt oder welcher Produktgruppe sie zugeordnet ist und dergleichen mehr. Kommt es nun zu einer Kommunikationsverbindung zwischen dieser Smart-Card und irgendeinem Feldgerät, erstellt das Feldgerät eine Aufzeichnung, wonach diese Karte innerhalb der vorgesehenen Produktgruppe an diesem Datum an diesem Ort genutzt wurde. Während der nächsten Kommunikationsverbindung wird dies dem Zentralrechner mitgeteilt. Dieser kann diese Informationen für weitere Actions umsetzen, und einen Abgleich des parallel geführten Smart-Card bezogenen Hintergrundkontos. Zu jeder Smart-Card kann im Zentralrechner ein Konto im Hintergrund geführt werden, indem die Eigenschaften der gespeicherten Produkte basierend auf den aufgezeichneten Benutzungen der Karte nachgeführt werden, z. B. verbleibendes Guthaben, aktuelle Gültigkeit eine Produktes.

Ein großes Problem automatischer Systeme ist beispielsweise die regelmäßige und pünktliche Bereitstellung von Weisungslisten mit Weisungen zur Veränderung von Produkteigenschaften, wie z. B. die Aktualisierung von Zeitkarten für einen neuen Gültigkeitsbereich oder die Erneuerung von Privilegien, beispielsweise ein Monatswechsel für Monatskarten und vergleichbare Vorgänge, wobei beispielsweise davon ausgegangen wird, daß die Monatskarte verlängert wurde. Eine erstmalige Nutzung kann nach Zeitrangwechsel zugelassen werden. Aufgrund der Nutzungsmeldung überprüft die Zentralrechneranlage die Bonität bzw., ob die Karte verlängert und bezahlt wurde. Ist dies nicht der Fall, wird beispielsweise eine Weisung an alle ausgegeben, den Produktcode beim nächsten Erscheinen auf der Karte zu löschen und diese Karte fortan deaktiv zu führen.

Eine Möglichkeit würde darin bestehen, zu jedem Monatswechsel oder Wochenwechsel oder sonstigen Zeitwechsel, der in Abhängigkeit von den angebotenen Produkten relevant ist, neue Weisungslisten an sämtliche Feldgeräte zu versenden, die bewirken würden, daß auf jeder Smart-Card das neue Gültigkeitsdatum vermerkt würde. Dies würde aber zu ungeheuren Datenströmen und Speicherbelastungen führen.

Um dies zu vermeiden kann gemäß einer Variante vorgesehen werden, daß aufgrund einer auf der Karte befindlichen Information das Feldgerät die Karte nach einem entsprechenden Zeitwechsel gültig passieren läßt und die Nutzung bei der nächsten Kommunikation über die Nutzungsaufzeichnung dem Zentralrechner zugängig macht. Es wird dann auf zentraler Seite geprüft, ob die Bonität des Kunden gegeben oder ein entsprechender Betrag angewiesen ist. Im positiven Falle wird dann keine neue Weisung erstellt und somit auf der Karte nichts verändert. Im negativen Fall wird mit der nächsten Weisungsliste an die Feldgeräte übermittelt, beim nächsten Auftauchen der Karte in einem Kommunikationsgerät eines Feldgerätes die auf der Karte befindliche Information bezüglich der Nutzungsaufzeichnung des Tickets zu löschen. Mit dieser Karte ist dann eine Nutzung des Systems nicht mehr ohne weiteres möglich.

Eine Alternative hierzu kann darin bestehen, daß in Abweichung zu der oben beschriebenen Möglichkeit eine Karte ausschließlich für das Zeitprodukt bereitgestellt wird und vollständig deaktiviert wird, wenn nach Beginn einer Periode eine Benutzung erfolgt ist und an den Zentralrechner übermittelt wurde, aber keine geldwerte Gegenleistung erbracht wurde. In der Weisungsliste würde dann die vollständige Deaktivierung der Karte bzw. des Produktes an die Feldgeräte übermittelt.

Eine alternative Möglichkeit besteht darin, daß zusätzlich zu der Produktinformation, beispielsweise Monatskarte für eine bestimmte Zone, Strecken oder dergleichen, das Zeitlimit notiert ist. Dies hat den besonderen Vorteil, daß die Karte auch an Offlinegeräten des Gesamtsystems, beispielsweise in Zügen verwendete Hand-held-Computer oder dergleichen, positiv nutzbar ist. Anhand der Produktinformation kann der Server per Weisungsliste veranlassen, daß bei Auftauchen einer Smart-Card mit der Produktnummer das neue Zeitlimit auf die Karte geschrieben wird. Dieses Produkt-Qualifikationssystem kann dann in den Feldgeräten verwaltet und auf Weisung des Zentralrechners umgesetzt werden, so daß spezielle Kartenkennungen bzw. Eignungskennungen auf den Karten vermeidbar sind. Dies hat den Vorteil, daß einem Kartenmißbrauch weitgehend Riegel vorgeschoben sind.

Es zeigt sich bereits, daß das erfindungsgemäße System und Verfahren überaus sicher ist. Relevante Informationen befinden sich nur auf der Zentralrechneranlage, die Feldebene und die Nutzerebene, sprich Smart-Card, enthalten nur reine System- und Nutzungsinformationen. Da auf der Smart-Card keine Nutzer- oder Kreditkarteninformationen enthalten sind, können diesbezügliche Kartenmißbräuche nicht stattfinden. Auch stellt das System aufgrund der aufgezeichneten Nutzungsvorgänge fest, zu welchem Zeitpunkt an welcher Stelle mit welcher Karte welches Produkt eingelöst bzw. benutzt wurde. Durch Logikanalyse läßt sich nunmehr feststellen, ob beispielsweise eine zweite Kommunikation mit der gleichen Karte an einem zeitlich völlig unwahrscheinlichen Ort bzw. mit einem unwahrscheinlich oder der Karte zugewiesenen Produkt erfolgt, was einen Hinweis auf die Existenz einer gefälschten oder doppelten Karte sein kann. Solche Verdachtsfälle werden in der Zentralrechneranlage festgestellt und führen zu Weisungen, die solche verdächtigen Karten sperren bzw. deaktivieren.

Das erfindungsgemäße System und darauf bezogene Verfahren sind überaus flexibel und an unterschiedlichste Abrechnungs-, Inkasso-, Bonitäts- und sonstige Zahlungssysteme anpaßbar. Das System weist ein extrem hohes Sicherheitsniveau auf und erfordert keine Dauerverbindung zwischen Zentralrechner und Feldgeräten.

Beim Einsatz in Bezug auf öffentliche Verkehrsmittel umfassen die Feldgeräte beispielsweise Fareboxen in Bussen, Parkschranken, Zugangsgates an Bahnhöfen oder Schwimmbädern und dergleichen mehr. Durch die hierarchische Aufteilung der Intelligenz und der Informationen werden Kommunikationen auf das wesentliche reduziert und insbesondere keine sicherheitsrelevanten Informationen übermittelt.

Das erfindungsgemäße System und darauf bezogene Verfahren bieten eine Reihe von Vorteilen gegenüber herkömmlichen und bekannten Systemen. Ein wesentlicher Aspekt besteht darin, daß auf der beim Nutzer befindlichen Smart-Card keinerlei relevanten Informationen enthalten sind. Die Karte selbst trägt neben einer Identifikation gegebenenfalls die Produktcodes. Darüber hinaus enthält sie in begrenztem Maß die jüngere Historie über die zuletzt abgearbeiteten Weisungen und gegebenenfalls auch Hinweise auf Zeit und Ort, beispielsweise Feldgerätnummer oder dergleichen, in Bezug auf die jeweilige Kommunikation. Die zwar öffentlich zugänglichen aber nicht mehr individuell zugeordneten Feldgeräte halten in erster Linie ebenfalls nur Produktinformationen und Produkteigenschaften im Datenbestand, gegebenenfalls noch spezielle Karten betreffende Informationen, die Aktionslisten oder Weisungslisten.

Alle sicherheitsrelevanten Informationen befinden sich nur in der Zentralrechneranlage. Dort werden virtuelle Kartenkonten geführt und mit den Nutzerinformationen und deren Bonitätsinformationen verknüpft und verwaltet. Eine genau strukturierte, hierarchische, auf Weisungen basierende Kommunikation ermöglicht ein zusammenhangloses Abarbeiten, ohne karten- oder nutzerspezifische Informationen preiszugeben. Dadurch wird das Gesamtsystem einerseits gegen Mißbrauch erheblich sicherer, da selbst der Nutzer nicht über weitergehende Informationen verfügt oder diese auf seiner Karte bereithält. Auch sind Manipulationen der Karte ausgeschlossen. Das Logiksystem dient der Erkennung der Verwendung von Kartenduplikaten und dergleichen. Die rein produktbezogene Informationshaushaltung ermöglicht darüber hinaus den Mischbetrieb von onlinefähigen und nicht onlinefähigen Geräten. Schließlich können auf einfachste Weise mit einem hohen Sicherheitsgrad und geringen Fehlfunktionsmöglichkeiten auch zeitbegrenzte Systeme realisiert werden, wie am Beispiel Monatskarten und dergleichen erläutert wurde. Selbst die Umstellung der die Zeiträume begrenzenden Enddaten erfolgt produktbezogen und weisungsgebunden. Zwar können nicht onlinefähige Endgeräte oder Feldgeräte weder Weisungslisten abarbeiten noch entsprechende Daten ändern, dies läßt sich jedoch abfangen, beispielsweise indem ein Kulanzzeitraum definiert wird, innerhalb welchem der Nutzer mit der Karte an einem onlinefähigen Feldgerät eine Kommunikationsverbindung herstellt.

Weitere Vorteile und Merkmal der Erfindung ergeben sich aus der folgenden Beschreibung anhand der Figuren. Dabei zeigen:
- Fig. 1: ein Funktionsschema zur Erläuterung des erfindungsgemäßen Systems und Verfahrens gemäß einem ersten Ausführungsbeispiel;
- Fig. 2: ein Funktionsschema zur Erläuterung des erfindungsgemäßen Systems und Verfahrens gemäß einem zweiten Ausführungsbeispiel und
- Fig. 3: ein Funktionsschema zur Erläuterung des erfindungsgemäßen Systems und Verfahrens gemäß einem dritten Ausführungsbeispiel.

In allen drei Figuren ist das System in einer Aufteilung von Leitebene, Feldebene und Nutzerebene, d. h. die Smart-Card-Ebene, aufgegliedert.

Wie zu erkennen ist, wirken die Ebenen über die auf der Übermittlung von Weisungslisten, Nutzungsaufzeichnungen und Reportslisten basierenden Kommunikation zusammen.

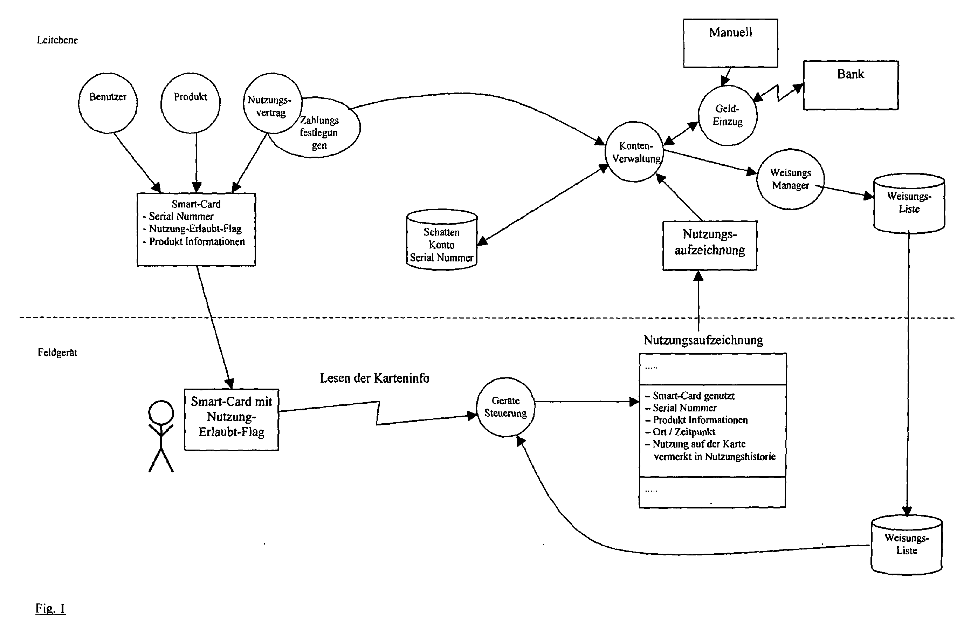

Gemäß Fig. 1 umfaßt die Leitebene im Kern den Weisungsmanager, der direkt mit einer Kontenverwaltung in Verbindung steht. Über diese Kontenverwaltung wird ein Schattenkonto zur Smart-Card-Serialnummer geführt. Die Kontenverwaltung organisiert auch den Geldeinzug in Bezug auf manuelle Einzahlungen, Bankeinzug, Kreditkartenverwaltungen und dergleichen. Darüber hinaus umfaßt die Leitebene die Benutzerinformationen, die Produktinformationen, den Nutzungsvertrag und die benutzerbezogenen Zahlungsfestlegungen, die wiederum in die Kontenverwaltung einfließen. Einige dieser Informationen werden auf die Smart-Card geschrieben, die dann dem Nutzer zur Verfügung gestellt wird. Dazu gehören die Serialnummer, Produktinformationen und im gezeigten Ausführungsbeispiel ein flag für einen "Nutzung-erlaubt-Modus".

Der Weisungsmanager wertet sämtliche Informationen aus und erstellt eine Weisungsliste, die an die Gerätesteuerung der jeweiligen Feldgeräte übertragen wird. Gelangt die Smart-Card auf der Feldgeräteebene in den Kommunikationsbereich des Feldgerätes, werden die Weisungen aus der Weisungsliste, die sich auf diese Smart-Card beziehen, abgearbeitet. Darüber hinaus wird ein Nutzungsprotokoll geführt, das umfaßt, daß die Smart-Card an diesem Ort um diese Zeit genutzt wurde, die Serialnummer, die Produktinformationen, und welche Nutzungshistorie auf der Karte vermerkt ist.

Die Nutzungsaufzeichnungen werden bei der nächsten Kommunikationsverbindung zur Zentralrechnereinheit an diese übertragen und fließen in die Kontenverwaltung ein. Der Weisungsmanager kann somit die Weisungsliste aktualisieren und die vollständig aktualisierte Weisungsliste wieder an sämtliche Feldgeräte übermitteln.

Dadurch, daß auf der Smart-Card die Nutzungshistorie aufgezeichnet wird, kann also in der Zwischenzeit jedes andere Feldgerät, welches noch die alte Weisungsliste hat, feststellen, welche Weisungen bereits abgearbeitet sind.

Auch gehen die Feldgeräte grundsätzlich davon aus, daß für diese Smart-Card die Nutzung erlaubt ist. Stellt der Weisungsmanager aufgrund der Kontenverwaltung und der Nutzungsaufzeichnungen fest, daß Leistungen in Anspruch genommen wurden, die nicht bezahlt sind, beispielsweise ein Zeitticket nicht verlängert oder dergleichen, Guthaben aufgebraucht usw., kann über die Weisungsliste die Löschung der Nutzung der Erlaubtflag veranlaßt werden. Die Karte ist dann für weitere Nutzungen gesperrt. Dies zumindest so lange, bis die flag aufgrund vorhandener Weisungen wieder gesetzt werden kann.

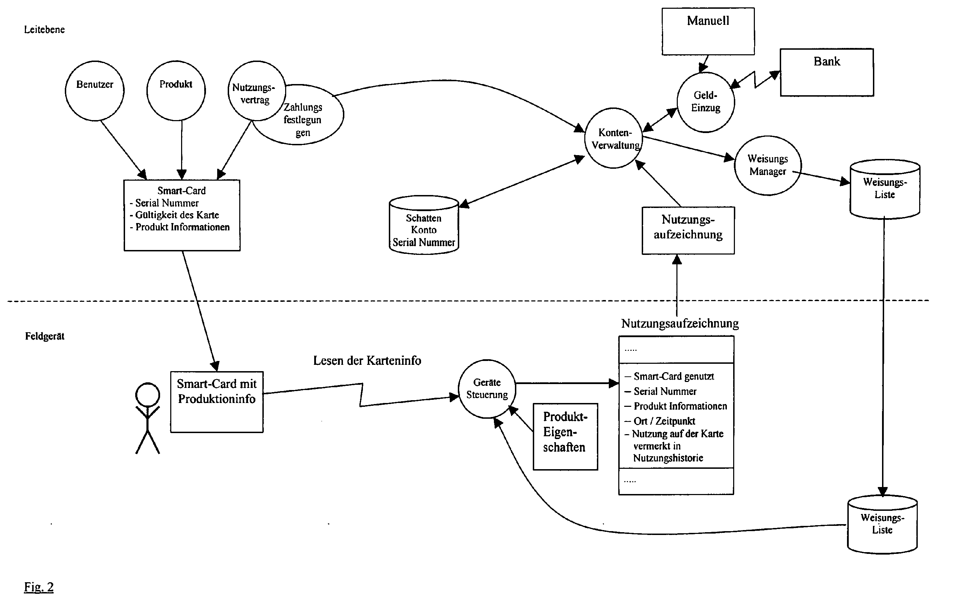

Bei dem Ausführungsbeispiel gemäß Fig. 2 wird das grundsätzlich selbe System verwandt, soweit die Leitebene betroffen ist. Auf der Feldgeräteebene fließen noch Eigenschaften der Produkte als Datenbestand ein. Die Smart-Card führt im Unterschied zum Ausführungsbeispiel 1 keine Nutzung-erlaubt-flag, sondern Produktinformationen. Produktinformationen sind beispielsweise die Produktnummern, für die diese Karte zugelassen ist. Eigenschaften der jeweiligen Produktinformationen stehen auf der Feldgeräteebene in diesem bereit, so daß diese vor Ort Entscheidungen bei der Kommunikation mit einer Smart-Card treffen können. Erst wenn aufgrund der Nutzungsaufzeichnungen der Weisungsmanager feststellt, daß beispielsweise ein nicht bezahltes Produkt genutzt wird, beispielsweise eine nicht verlängerte Monatskarte oder dergleichen, wird über die Weisungsliste die Produktinformation geändert und beim nächsten Auftauchen der Karte im Kommunikationsbereich eines Feldgerätes diese geändert.

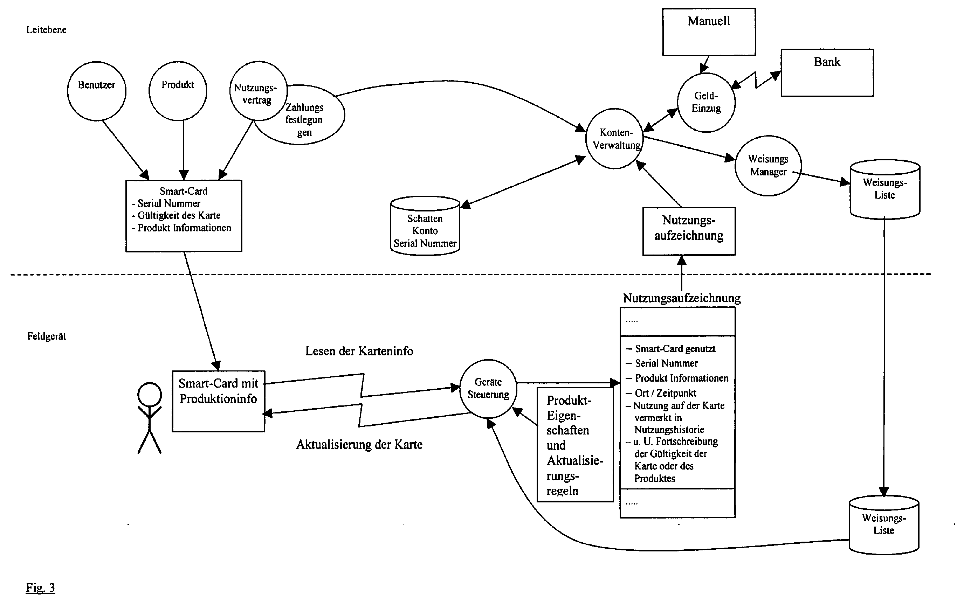

Das Ausführungsbeispiel gemäß Fig. 3 entspricht dem Ausführungsbeispiel gemäß Fig. 2. Eine Ergänzung ergibt sich daraus, daß den Produkteigenschaften noch weitere Informationen beigefügt sind, beispielsweise Aktualisierungsregeln. Auf diese Weise kann das Feldgerät entscheiden, daß beispielsweise alle Produkte eines bestimmten Typs zu einem bestimmten Zeitpunkt um eine entsprechende Phase verlängert werden usw.. Das Feldgerät kann dann entsprechende Informationen auf der Smart-Card hinterlegen.

Das Beschreiben der Smart-Card mit standardgemäßen Informationen wie Nutzungsaufzeichnungen, Nutzungshistorie oder dergleichen ist in allen Fällen gegeben. Der Kommunikationspfeil von der Gerätesteuerung zur Smart-Card in Fig. 3 zeigt den konkreten Vorgang der Aufzeichnung einer Produkteigenschaft auf der Smart-Card an.

Wird also beispielsweise ein Produkt anhand seiner Nummer als Monatsticket identifiziert und sagt die Regel, daß diese Tickets bei Monatswechsel um einen Monat verlängert werden, schreibt die Gerätesteuerung zum Monatsbeginn beim ersten Auftauchen der Karte im Kommunikationsbereich eines Feldgerätes, welches onlinefähig ist, gemäß der Regel das neue Gültigkeitsdatum in die Karte.

Die beschriebenen Ausführungsbeispiele dienen nur der Erläuterung und sind nicht beschränkend.

## Patentansprüche

1. System zur Verwaltung von auf der Verwendung von Smart-Cards basierenden Nutzungsberechtigungen, umfassend eine Zentralrechneranlage, Feldgeräte und bei potentiellen Nutzern befindliche Smart-Cards, wobei die Zentralrechneranlage Datenbanken mit allen Informationen in Bezug auf die Nutzer, Nutzerkonten, diesen zugeordneten Smart-Cards, Feldgeräte und Produkte führt, zumindest zeitweise mit den Feldgeräten eine Kommunikationsverbindung aufbaut und hält und aufgrund der ihr zur Verfügung stehenden Informationen Weisungen über durchzuführende Aktionen erstellt und an eine Vielzahl von Smart-Card-bezogen relevanten Feldgeräten übermittelt, die Feldgeräte zumindest Datenbestände mit Informationen in Bezug auf die Smart-Cards und Produkte führen, so daß bei Aufbau einer Kommunikationsverbindung zwischen einem Feldgerät und einer Smart-Card wenigstens ein Teil der Smart-Cardbezogenen Weisungen aus der Weisungsliste abgearbeitet und feldgerätseitig gespeichert und während der nächsten Kommunikationsverbindung an die Zentralrechneranlage übermittelt werden, und wobei die Smart-Cards eine Identifikation tragen und bei einer Kommunikationsverbindung mit einem Feldgerät Informationen austauschen und eine vorgegebene Anzahl von abgearbeiteten Weisungen speichern.

2. System nach Anspruch 1, **dadurch gekennzeichnet, daß** die Weisungen fortlaufend numeriert werden.

3. System nach einem der vorhergehenden Ansprüche, **dadurch gekennzeichnet, daß** in den Weisungen die Smart-Card-Identifikationen enthalten sind.

4. System nach einem der vorhergehenden Ansprüche, **dadurch gekennzeichnet, daß** die Anzahl der von der Zentralrechneranlage an die Feldgeräte pro Smart-Card übermittelten Weisungen kleiner oder gleich der Anzahl der auf der Smart-Card speicherbaren Weisungen ist.

5. System nach einem der vorhergehenden Ansprüche, **dadurch gekennzeichnet, daß** die Zentralrechneranlage aufgrund der Rückmeldungen von den Feldgeräten über abgearbeitete Weisungen die Datenbanken aktualisiert und Aktualisierungsweisungen erstellt.

6. Verfahren zur Verwaltung von auf der Verwendung von Smart-Cards basierenden Nutzungsberechtigungen unter Verwendung eines Systems mit einer Zentralrechneranlage, Feldgeräten und bei potentiellen Nutzern befindlichen Smart-Cards, wobei die Zentralrechneranlage Datenbanken mit allen Informationen in Bezug auf die Nutzer, Nutzerkonten, diesen zugeordneten Smart-Cards, Feldgeräte und Produkte führt, zumindest zeitweise mit den Feldgeräten eine Kommunikationsverbindung aufbaut und hält und aufgrund der ihr zur Verfügung stehenden Informationen Weisungen über durchzuführende Aktionen erstellt und an eine Vielzahl von Smart-Card-bezogen relevanten Feldgeräten übermittelt, die Feldgeräte zumindest Datenbestände mit Informationen in Bezug auf die Smart-Cards und Produkte führen, so daß bei Aufbau einer Kommunikationsverbindung zwischen einem Feldgerät und einer Smart-Card wenigstens ein Teil der Smart-Cardbezogenen Weisungen aus der Weisungsliste abgearbeitet und feldgerätseitig gespeichert und während der nächsten Kommunikationsverbindung an die Zentralrechneranlage übermittelt werden, und wobei die Smart-Cards eine Identifikation tragen und bei einer Kommunikationsverbindung mit einem Feldgerät Informationen austauschen und eine vorgegebene Anzahl von abgearbeiteten Weisungen speichern.

7. Verfahren nach Anspruch 6, **dadurch gekennzeichnet, daß** die Weisungen fortlaufend numeriert werden.

8. Verfahren nach einem der Ansprüche 6 oder 7, **dadurch gekennzeichnet, daß** in den Weisungen die Smart-Card-Identifikationen enthalten sind.

9. Verfahren nach einem der Ansprüche 6 bis 8, **dadurch gekennzeichnet, daß** die Anzahl der von der Zentralrechneranlage an die Feldgeräte pro Smart-Card übermittelten Weisungen kleiner oder gleich der Anzahl der auf der Smart-Card speicherbaren Weisungen ist.

10. Verfahren nach einem der Ansprüche 6 bis 9, **dadurch gekennzeichnet, daß** die Zentralrechneranlage aufgrund der Rückmeldungen von den Feldgeräten über abgearbeitete Weisungen die Datenbanken aktualisiert und Aktualisierungsweisungen erstellt.

11. Verfahren nach einem der Ansprüche 6 bis 10, **dadurch gekennzeichnet, daß** die Zentralrechneranlage aufgrund der stattgefundenen Kommunikationsverbindungen zwischen Smart-Cards und Feldgeräten und gegebenenfalls den Produktinformationen eine Logikanalyse vornimmt, um Nutzungen gefälschter oder doppelter Karten an aufgrund der Analyse unwahrscheinlicher Produkte und Produkteigenschaften festzustellen.

12. Verfahren nach einem der Ansprüche 6 bis 11, **dadurch gekennzeichnet, daß** die Zentralrechneranlage aufgrund der stattgefundenen Kommunikationsverbindungen zwischen Smart-Cards und Feldgeräten und gegebenenfalls den Produktinformationen eine Logikanalyse vornimmt, um Nutzungen gefälschter oder doppelter Karten an aufgrund der Analyse unwahrscheinlichen Orten festzustellen.

13. Verfahren nach einem der Ansprüche 6 bis 12, **dadurch gekennzeichnet, daß** von den Feldgeräten Produkteigenschaften automatisch bei einem Wechsel dieser Eigenschaften auf den Smart-Cards, die diese Produkte aufweisen, geändert werden.
